# EUROPEAN PATENT SPECIFICATION

(11) **EP 1 361 804 B1**
(45) Date of publication and mention of the grant of the patent: **29.09.2004**
(21) Application number: 01934212.0
(22) Date of filing: 29.05.2001
(51) Int. Cl.: A23L 1/314, A23L 1/31, A23L 1/30, A23L 1/315, A23L 1/317

(54) **METHOD OF PRODUCTION OF A MEAT PRODUCT CONTAINING OLIVE OIL**
VERFAHREN ZUR HERSTELLUNG EINES OLIVENÖL ENTHALTENDEN FLEISCHPRODUKTS
PROCEDE DE FABRICATION DE PRODUIT CARNE CONTENANT DE L'HUILE D'OLIVE

(30) Priority: 19.02.2001 GR 2001100089
(43) Date of publication of application: 19.11.2003
(73) Proprietor: " Creta Farm Anonimos Viomichaniki & Emporiki Etaireia", 741 00 Rethymnon (GR)
(72) Inventor: Domazakis, Emmanouil, 741.00 Rethymnon (GR)
(74) Representative: Tsirimonakis, Matthew E.
(86) International application number: PCT/GR2001/000025
(87) International publication number: WO 2002/065860

(56) References cited:
- US-A- 5 238 701
- VAN DEN HOVEN ET AL: "Functionality of dairy ingredients in meat products" FOOD TECHNOLOGY,US,INSTITUTE OF FOOD TECHNOLOGISTS. CHICAGO, vol. 41, no. 10, 1 October 1987 (1987-10-01), pages 72-73,76-77,103, XP002081220 ISSN: 0015-6639

## Description

The present development involves the production of goods based on meat with the main features:
1. use of olive oil instead of the usual practical addition of animal fat (fatty tissue)
2. use of thin bonny muscular tissue (meat)
3. addition of special subsidiary material
4. help of appropriate technological procedures and process that are developed aiming at:
   - obtainment of solid emulsion - meat-paste of firm structure, apt to undergo any suitable caloric process, with further target the embodiment and firm connection of olive oil and after the coagulation of the proteins in the main system of the emulsion that consists of proteins / water / olive oil.
   - the obtainment of the maximum possible maintenance of organic-receptive, scenic-chemical and nutrient features of the differentiation determinant **Olive Oil**.

The cooked pork meats of contracted meat constitute a structural "emulsion" with the participation of essential ingredients of the proteins of the meat, water (of the meat + additional water) and additional fat (pork fatty tissue).

The stability of the "emulsion" depends mainly, among others, on the connective ability of used meat to retain water and to digest the additional fat.

Especially the muscular proteins and the salt-solvents (actinia, myosin and actomyosin) that represent the main part of (approximately 60%) of the muscular occiputs, contribute to the stability of the "emulsion", as in their hydrated condition function as a protective frame of the embodied fat, which is the non-continuing phase of the emulsion and the factor of their non-stabilization.

The obtainment of stabilized embodiment of the fat (fat-orbs) in the "emulsion" constitutes a technological target of this development that is faced with known combined techniques, which affect positively to this direction and include the adjustment of the parameters, such as the specific selection of meat, the regulation of PH of the meat, the quantity of additional salt, the use of subsidiary technology, the conditions of process - creation of meat-paste -, the timetable of thermal process and freezing of the eventual product, etc.

Nevertheless, the embodiment of olive oil in comparison with the classic addition of pork fat, as long as it is tested with classic techniques, runs into difficulties of instability or created non-stabilized tendencies, not only of the emulsion of meat-paste but also of the eventual products that usually shows the appearance of "**de-oil**".

Consolidated well-known techniques of indirect embodiment of vegetable fats are known, that:
- include a procedure of preliminary caloric process of olive oil in levels of 100° C twice.

US-A-5 238 701 discloses a process for making delicatessen meat products.

Especially in case of olive oil whose part in nutrition of humans is distinctive among seed-oils and other vegetable fats and also internationally renowned for its beneficial features of its vegetable ingredients (reference to Omega fat acids and their protective part, low cholesterol, tocophenols and polyphenols and their role).

Therefore, it is thought to be essential,

On one hand the, its participation as an ingredient of substitution of animal fat in cooked pork meats (products of caloric process of contracted meat) to be achieved under especially protective conditions, so that the maximum possible transfer of its characteristics on the product being hosted could be secured.

On the other hand, with the process of embodiment to ensure the traditional technique of producing cooked pork meats, and scientific facts will systematically be taken into consideration based on the characteristics of proteins, fats and oils as well as the potential of their in-between connection depended on these characteristics.

The fact that the stability of "emulsion meat" is affected by the following facts, must be taken into account:
- the source and the composition of the embodied fat
- its scenic-chemical characteristics, such as:
   - the profile of fat acids (kind and degree of satiation)
   - the SFI (Solid Fat Index)
   - the relation of PUFA, MUFA / SUFA in the applicable temperatures in the different stages of production

It is obvious that from technological aspect the differences between port fat and olive oil should be taken into consideration when creating a stable emulsion.

In the critical temperatures of production (0 - 4° C) up to 71° C) but also in the temperatures of freezing (after caloric process) in addition to the later maintenance (3 - 7° C) of the product, its SFI that has a very significant part.
In the case of olive oil its characteristics presuppose embodiment under specific conditions, that is composed:
- the creation of the maximum possible embodiment of oil with mechanical process (mixture, similitude of the participated ingredients)
- the estimation of the ideal quantitative relation between these ingredients so that the maximum possible soaking and maintenance of oil in the emulsion at the same time with the maximum possible absorbance of additional water (relation fat / proteins, water of proteins).
- the creation of a stable "waterproof" protein complex round the fat-orbs, without the application of high temperatures for the transformation of the proteins, with the application of mechanical process under selected conditions with the application of vacuum and temperature in the phase of mixture and degree of assimilation - with the maximum possible spreading and size of fat-orbs.

In the end, one significant aim is the insurance of a stable behaviour of the emulsion meat-paste in the phases of caloric process, the later freezing of the product, the behavior of the product in a possible cutting and packing in vacuum and during the maintenance in conditions of freezing.

The aim of the present development is the production of goods based on meat of thermal process (products of cooked pork meat - sausages - salamis of contracted meat):
- with direct in frost embodiment of olive oil and partial or maximum possible substitution of animal fat
- with the addition of combined subsidiary technology and
- the application of special technological process

This aim is achieved with the mixture of meat of low fat-content in frost with olive oil in combination with the use of vegetable proteins, milk proteins, polyphosphoric salts, water and salt.

In this way, the present development offers pork meats with olive oil and a method for their production with in frost mixture of olive oil, non-fat meat and water.

Thin chopped non-fat meat of temperature 0° C is mixed with H₂O of temperature -2° C in a machine of mixture with simultaneous addition of salt. Next, we insert polyphosphoric salts, preservatives and spices. After all these are mixed we add gradually the vegetable proteins, the proteins of milk and starch. When the temperature of the mixture is 2° C we insert the olive oil. The mixing continues with simultaneous application of vacuum 960 mbar for 3 min, aiming to deduct the closed in the mixture oxygen in order to avoid oxidation. The mixing continues until the temperature is 4° C. The entire time of mixing is 15 min. and the absorbing power 26 KW. The mixture then goes to a filling machine where it is placed with simultaneous application of vacuum 1000 mbar with absorbing power 7 KW and later on, it is pasteurized in 71° C. The entire time of thermal process depends on the diameter of the product and ranges from 1 to 3 hours. After the pasteurization, the product is frozen in freezing chambers with temperature of -2° C up to 2° C.

The pork meats with olive oil that are produced according to this development have an excellent stability as far structure is concerned (compactness) due to the use of lean meat, application of low temperatures and its production in vacuum. The scenic-chemical features of olive oil, which these products comprise remain unchangable, because of the low temperatures, which are enforced during the productive procedure.

## Claims

1. Method of production of goods based on meat which is distinguished by the embodiment of olive oil in substitution of animal fat, instead of the traditional use of animal fat or the use of emulsion which consist of vegetable fat, water and milk proteins prepared in temperatures over 100 C° (in heat), said method including the following stages:
(a) lean meat of a temperature of 0 C° is mixed with H₂O of a temperature of -2 C°, salt, polyphosphoric salts, preservatives, vegetable proteins, milk proteins and starch.
(b) said olive oil is inserted, the mixing is continued with simultaneous application of vacuum for 3 min. and the mixing stops when the temperature is 4 C°.
(c) the mixture goes to filling machines where it is encased with simultaneous application of vacuum 1000mbar and later on it is pasteurized at a temperature of 71 C°.
(d) after the pasteurization, the product freezes in freezing chambers at a temperature of up to 2 C°.

2. Method according to claim (1), wherein the whole time of the thermal process depends on the diameter of the final product and ranges from 1 to 3 hours

3. The products based on meat, with embodiment of olive oil, which are obtainable according to the methods of claims (1) and (2).

## Patentansprüche

1. Verfahren zur Herstellung von Fleischerzeugnissen zur Substitution tierischen Fettes durch Inkorporierung von Olivenoel, anstelle des ueblicherweise eizusetzenden tierischen Fettes oder derVerwendung einer Emulsion, die aus Pflanzenfett ,Wasser und Milcheiweiss zusammengesetzt und ueber 100 C° vorerhitzt ist. Das Verfahren besteht aus folgenden Schritten :
(a) Magerfleisch ( 0 C°) wird mit Wasser ( -2 C°) , Salz, Polyphosfatsalzen, Konservierungsmitteln, Pflanzeneiweiss, Milcheiweiss und Staerke zusammengemischt.
(b) Dem Gemisch wird Olivenoel zugemischt ,wobei der Prozess fuer weitere 3 Minuten unter Vacuum fortgesetzt wird , bis zur Erreichung einer Temperatur von 4 C°.
(c) Das auf eine Fuellmaschine uebertragene Gemisch wird unter Vacuum (1000 mbar) in Huellen eingefuellt und daraufhin bei 71 C° pasteurisiert.
(d) Das Produkt wird nach der Pasteurisation in Kuehlraeumen auf 2 C° heruntergekuehlt.

2. Je nach Endprodukt-Kaliber betraegt die Gesamtzeit zur Vollendung des thermischen Prozesses (patentanspruch 1) 1 bis 3 Stunden.

3. Fleischerzeugnisse mit inkorporiertem Olivenoel, hergestellt nach dem Verfahren von : patentanspruch (1) und patentanspruch (2).

## Revendications

1. Une méthode de production de produits basés sur la viande, caracrérisée par l' incorporation d'huile d'olive en substitution de la matière grasse animale, au lieu de l'utilisation traditionnelle de la matière grasse animale ou de l'utilisation d' une émulsion composée de matière grasse végétale, de l'eau et de protéines de lait et preparée à des températures supérieures de 100 C° (à chaud). Cette méthode comprend les étapes suivantes:
(a) Viande maigre de température de 0 C° se mélange avec du H₂O de température de -2 C°, du sel, des polyphosfates, des préservatifs, des protéines végétales, des protéines de lait et de l'amidon.
(b) L'huile d'olive est insérée dans le produit et le mélange continue avec l' application simultanée de vacuum pour 3 minutes et le mélange s'arrête quand la température arrive à 4 C°.
(c) Le mélange entre dans les machines de remplissage, où il s' encaisse avec application simultanée de vacuum 1000 mbar et à la suite il est pasteurisé à une température de 71 C°.
(d) Après la pasteurisation, le produit se refroidit dans des chambres frigorifiques à une température jusqu'à 2 C°.

2. Une méthode suivant la revendication (1) à laquelle la durée du processus thermal dépend du diamètre du produit final et varie d'une à trois heures.

3. Les produits basés sur la viande avec incorporation d'huile d'olive qui sont obtenus suivant les méthodes des revendications (1) et (2).
